(19) Europäisches Patentamt
European Patent Office
Office européen des brevets

(11) **EP 4 601 381 A1**

(12) **EUROPEAN PATENT APPLICATION**
published in accordance with Art. 153(4) EPC

(43) Date of publication:
**13.08.2025 Bulletin 2025/33**

(51) International Patent Classification (IPC):
*H04W 72/12* (2023.01)    *H04L 5/00* (2006.01)

(21) Application number: **23859283.6**

(22) Date of filing: **28.08.2023**

(52) Cooperative Patent Classification (CPC):
**H04L 5/00; H04W 72/0446; H04W 72/0453;
H04W 72/12; H04W 72/1263; H04W 72/54**

(86) International application number:
**PCT/CN2023/115174**

(87) International publication number:
**WO 2024/046251 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.09.2022  CN 202211069430**

(71) Applicant: **Apogee Networks, LLC
Dallas, TX 75201 (US)**

(72) Inventors:
• **WU, Lu
  Shanghai 201206 (CN)**
• **ZHANG, Xiaobo
  Shanghai 201206 (CN)**

(74) Representative: **Gunzelmann, Rainer
  Wuesthoff & Wuesthoff
  Patentanwälte und Rechtsanwalt PartG mbB
  Schweigerstraße 2
  81541 München (DE)**

(54) **METHOD AND APPARATUS USED IN NODE FOR WIRELESS COMMUNICATION**

(57)    Disclosed in the present application are a method and apparatus used in a node for wireless communication. The method comprises: a first node receiving a first signaling group, which is used for scheduling a first signal and a second signal in a first serving cell. A first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed depends on whether a first condition is met; and when the first condition is met, the target signal is processed; and the first condition comprises a target transmission rate being less than or equal to a target rate threshold, and the calculation of the target transmission rate depends on whether the first signaling group is used for scheduling a PDSCH or a PUSCH.

FIG. 1

## Description

## Technical Field

The present application relates to transmission methods and apparatus in wireless communication systems, in particular to transmission methods and apparatus of wireless signals in wireless communication systems that support cellular networks.

## Background Technology

In a 5G NR (New Radio) system, both the base station and terminal device will be configured with multiple antenna panels. The NR Rel-16 standard can already support sending wireless signals from the base station through multiple antenna panels simultaneously. However, even if a terminal device is configured with multiple antenna panels, it only supports transmission based on antenna panel selection; that is, wireless transmission is only allowed on one antenna panel at a time. In the future evolution of 5G NR systems, in order to increase system capacity, both single-panel transmission and simultaneous transmission of wireless signals on multiple antenna panels must be supported on both base stations and terminal devices.

## Summary of Invention

The inventors, through research, have found that determining whether a scheduled PDSCH or PUCSCH is being processed based on the transmission rate is a critical issue to be addressed.

The present application discloses a solution to the above problems. It should be noted that although the above description uses uplink and downlink as an example, this application also applies to other scenarios, such as companion links, achieving similar effects to those in uplink and downlink. In addition, adoption of a unified solution across different scenarios (including but not limited to downlink, uplink, and companion link) can also help reduce hardware complexity and costs. In the absence of conflict, the embodiments and features in any node of the present application may be applied to any other node, and vice versa. In the absence of conflict, the embodiments of the present application and the features in the embodiments may be combined with each other arbitrarily.

As one embodiment, the interpretation of terminology in the present application is the definition of a specification protocol TS36 series, referring to 3GPP.

As one embodiment, the interpretation of terminology in the present application is the definition of a specification protocol TS38 series, referring to 3GPP.

As one embodiment, the interpretation of terminology in the present application is the definition of a specification protocol TS37 series, referring to 3GPP.

As one embodiment, the interpretation of terminology in the present application refers to the definitions in the specifications protocol of IEEE (Institute of Electrical and Electronics Engineers).

The present application discloses a method used in a first node for wireless communication, comprising:

receiving a first signaling group, which is used for scheduling a first signal and a second signal in a first serving cell;

wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed depends on whether a first condition is met; and when the first condition is met, the target signal is processed; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

As one embodiment, issues to be addressed by the present application include: determining if a scheduled PDSCH or PUCSCH is processed based on the transmission rate.

One aspect according to the present application, wherein when the first condition is not met, the target signal is not required to be processed.

One aspect according to the present application, wherein when the first signaling group is used for scheduling PUSCH, the target transmission rate is equal to the sum of the transmission rate of the first signal and the transmission rate of the second signal.

One aspect according to the present application, wherein when the first signaling group comprises a first signaling group and a second signaling group, the first signal is a PDSCH scheduled by the first signaling group, and the second signal is a PDSCH scheduled by the second signaling group, the target transmission rate is equal to the transmission rate of the target signal.

One aspect according to the present application, wherein when the first signal and the second signal are scheduled by the same signaling, the first signaling group includes the same signaling scheduling the first signal and the second signal, the first signaling group is used for scheduling PDSCH, the first signal and the second signal are scheduled for carrying a first bit block, and the first bit block includes part or all of the code blocks of a transport block, the target transmission rate is equal to a first integer divided by the duration of a first time domain resource, the first integer is linearly associated with the number of code blocks included **in** the first bit block, the first integer is a positive integer, and the time domain resources occupied by the first signal and the time domain resources occupied by the second signal are both the first time domain resource.

One aspect according to the present application, comprising:

sending the first signal and the second signal when the first signaling group is used for scheduling PUSCH and the first condition is met.

One aspect according to the present application, comprising:

when the first signal and the second signal are PDSCH scheduled by the same signaling, the first signaling group includes the same signaling scheduling the first signal and the second signal, the first signal and the second signal are scheduled for carrying a first bit block, the first bit block includes part or all of the code blocks of a transport block, and the first condition is met, receiving the first signal and the second signal.

One aspect according to the present application, comprising:

when the first signaling group includes a first signaling and a second signaling, the first signal is a PDSCH scheduled by the first signaling, the second signal is a PDSCH scheduled by the second signaling, and the first signal meets the first condition, receiving the first signal; when the first signaling group includes a first signaling and a second signaling, the first signal is a PDSCH scheduled by the first signaling, the second signal is a PDSCH scheduled by the second signaling, and the second signal meets the first condition, receiving the second signal.

The present application discloses a method used in a second node for wireless communication, comprising:

sending a first signaling group, which is used for scheduling a first signal and a second signal in a first serving cell;
wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed by the receiver of the first signaling group depends on whether a first condition is met; and when the first condition is met, the target signal is processed by the receiver of the first signaling group; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

One aspect according to the present application, wherein when the first condition is not met, the receiver of the first signaling group is not required to process the target signal.

One aspect according to the present application, wherein when the first signaling group is used for scheduling PUSCH, the target transmission rate is equal to the sum of the transmission rate of the first signal and the transmission rate of the second signal.

One aspect according to the present application, wherein when the first signaling group comprises a first signaling group and a second signaling group, the first signal is a PDSCH scheduled by the first signaling group, and the second signal is a PDSCH scheduled by the second signaling group, the target transmission rate is equal to the transmission rate of the target signal.

One aspect according to the present application, wherein when the first signal and the second signal are scheduled by the same signaling, the first signaling group includes the same signaling scheduling the first signal and the second signal, the first signaling group is used for scheduling PDSCH, the first signal and the second signal are scheduled for carrying a first bit block, and the first bit block includes part or all of the code blocks of a transport block, the target transmission rate is equal to a first integer divided by the duration of a first time domain resource, the first integer is linearly associated with the number of code blocks included in the first bit block, the first integer is a positive integer, and the time domain resources occupied by the first signal and the time domain resources occupied by the second signal are both the first time domain resource.

One aspect according to the present application, comprising:

receiving the first signal and the second signal when the first signaling group is used for scheduling PUSCH and the first condition is met.

One aspect according to the present application, comprising:

when the first signal and the second signal are PDSCH scheduled by the same signaling, the first signaling group includes the same signaling scheduling the first signal and the second signal, the first signal and the second signal are scheduled for carrying a first bit block, the first bit block includes part or all of the code blocks of a transport block, and the first condition is met, sending the first signal and the second signal.

One aspect according to the present application, comprising:

when the first signaling group includes a first signaling and a second signaling, the first signal is a PDSCH scheduled by the first signaling, the second signal is a PDSCH scheduled by the second signaling, and the first signal meets the first condition, sending the first signal; when the first signaling group includes a first signaling and a second signaling, the first signal is a PDSCH scheduled by the first signaling, the second signal is a PDSCH scheduled by the second signaling, and the second signal meets the first condition, sending the second signal.

One aspect according to the present application, comprising:

when the first signaling group is used for scheduling PDSCH, sending the first signal and the second signal.

The present application discloses a first node device for wireless communication, comprising:

a first receiver receiving a first signaling group, which is used for scheduling a first signal and a second signal in a first serving cell; wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed depends on whether a first condition is met; and when the first condition is met, the target signal is processed; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

The present application discloses a second node device for wireless communication, comprising:

a second transmitter sending a first signaling group, which is used for scheduling a first signal and a second signal in a first serving cell;

wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed by the receiver of the first signaling group depends on whether a first condition is met; and when the first condition is met, the target signal is processed by the receiver of the first signaling group; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

As one embodiment, the present application has the following advantages over conventional schemes:

- for two signals overlapping in the time domain, whether the two signals are processed is determined based on whether the transmission rate is not greater than a rate threshold.

**Description of Drawings**

Other features, objects, and advantages of the present application will become more apparent by reading the detailed description of the non-limiting embodiments with reference to the following drawings:

FIG. 1 shows a flow chart of a first signaling group according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic view of a first communications device and a second communications device according to one embodiment of the present application;
FIG. 5 shows a flow chart of transmission according to one embodiment of the present application;

FIG. 6 shows a schematic diagram of whether a target signal is processed being dependent on whether a first condition is met according to one embodiment of the present application;

FIG. 7 shows a schematic diagram of whether a target signal is processed being dependent on whether a first condition is met according to another embodiment of the present application;

FIG. 8 shows a schematic diagram of a target transmission rate according to one embodiment of the present application;

FIG. 9 shows a schematic diagram of a target transmission rate according to another embodiment of the present application;

FIG. 10 shows a schematic diagram of a target transmission rate according to another embodiment of the present application;

FIG. 11 shows a structural block diagram of a processing apparatus for use in a first node device according to one embodiment of the present application;

FIG. 12 shows a structural block diagram of a processing apparatus for use in a second node device according to one embodiment of the present application.

## Detailed Description

The technical solutions of the present application will be described in further detail below in conjunction with the accompanying drawings, and it is to be noted that the embodiments in the present application and the features in the embodiments may be arbitrarily combined with each other without conflict.

## Embodiment 1

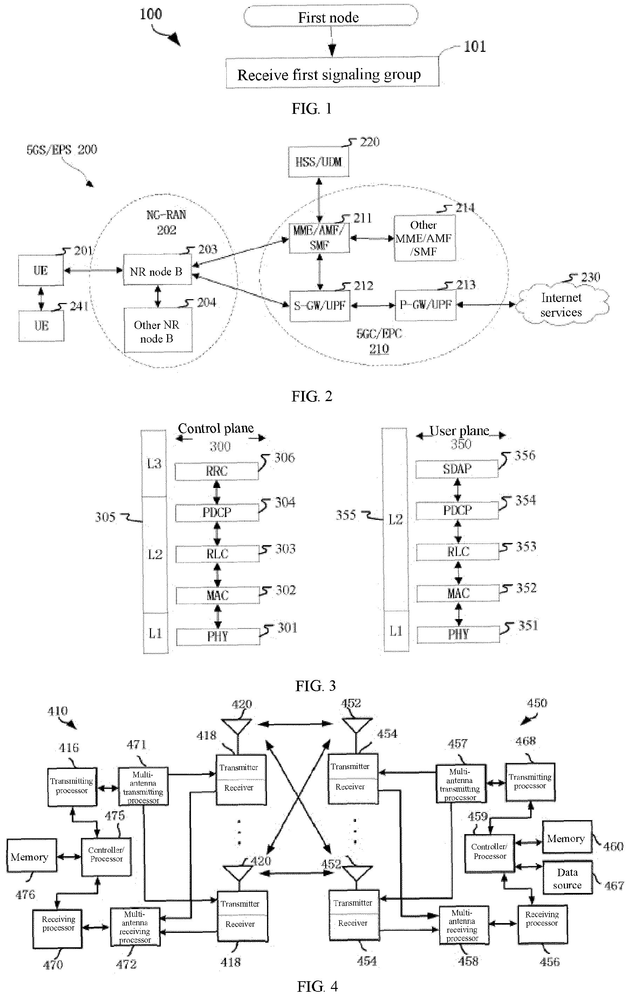

Embodiment 1 exemplifies a flow chart of a first signaling group according to one embodiment of the present application, as shown in FIG. 1. In 100 shown in FIG. 1, each block represents a step.

In Embodiment 1, the first node in the present application receives a first signaling group in step 101, and the first signaling group is used for scheduling a first signal and a second signal in a first serving cell; wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed depends on whether a first condition is met; and when the first condition is met, the target signal is processed; when the first signaling group is used for scheduling PDSCH, the processing includes receiving and the spatial characteristic includes QCL (Quasi Co-Location) parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

Typically, when the first signaling group is used for scheduling PDSCH (Physical Downlink Shared CHannel), the first signal and the second signal are PDSCH scheduled by the first signaling group; when the first signaling group is used for scheduling PUSCH (Physical Uplink Shared CHannel), the first signal and the second signal are PUSCH scheduled by the first signaling group.

Typically, when the first signaling group is used for scheduling PDSCH, the PDSCH scheduled by the first signaling group is used for transmission of the first signal and the second signal; when the first signaling group is used for scheduling PUSCH, the PUSCH scheduled by the first signaling group is used for transmission of the first signal and the second signal.

Typically, when the first signaling group is used for scheduling PDSCH, the first signaling group indicates scheduling information of the target signal and the scheduling information of the target signal comprises at least one of the occupied time domain resource, the occupied frequency domain resource, MCS (Modulation and Coding Scheme), antenna port, HARQ (Hybrid Automatic Repeat reQuest) process number, RV (Redundancy Version), NDI (New Data Indicator), and TCI (Transmission configuration indicator) state; when the first signaling group is used for scheduling PUSCH, the first signaling group indicates scheduling information of the target signal and the scheduling information of the target signal comprises at least one of the occupied time domain resource, the occupied frequency domain resource, MCS (Modulation and Coding Scheme), antenna port, HARQ (Hybrid Automatic Repeat reQuest) process number, RV (Redundancy Version), NDI (New Data Indicator), SRS (Sounding Reference Signal) resource set indicator, SRS resource indicator, and precoding information and number of layers.

As one embodiment, the frequency domain resources scheduled for the first signal and the second signal, respectively, are orthogonal.

As one embodiment, the frequency domain resources scheduled for the first signal and the second signal, respectively, are overlapping.

As one embodiment, the time-frequency resources scheduled for the first signal and the second signal, respectively, include at least one identical resource element (RE).

As one embodiment, the time domain resources scheduled for the first signal and the second signal, respectively, include at least one identical symbol.

As one embodiment, the time domain resources scheduled for the first signal and the second signal, respectively, include identical symbols.

As one embodiment, the time domain resources scheduled for the first signal and the second signal, respectively, include partially or entirely identical symbols.

As one embodiment, the symbol is a single carrier symbol.

As one embodiment, the symbol is a multi-carrier symbol.

As one embodiment, the symbol is an OFDM (Orthogonal Frequency Division Multiplexing) symbol.

As one embodiment, the symbol is a SC-FDMA (Single Carrier-Frequency Division Multiple Access) symbol.

As one embodiment, the symbol is a DFT-s-OFDM (Discrete Fourier Transform-Spread-Orthogonal Frequency Division Multiplexing) symbol.

As one embodiment, the symbol is an FBMC (Filter Bank Multi-Carrier) symbol.

As one embodiment, the symbol includes CP (Cyclic Prefix).

As one embodiment, the symbol is an OFDM symbol in which transform precoding (or transform precoder) is disabled.

As one embodiment, the symbol is an OFDM symbol in which transform precoding (or transform precoder) is enabled.

Typically, the first signaling group is used for scheduling PDSCH of a first serving cell, or the first signaling group is used for scheduling PUSCH of a first serving cell.

Typically, the first signaling group is used for scheduling PDSCH of the same BWP in a first serving cell, or the first signaling group is used for scheduling PUSCH of the same BWP in a first serving cell.

As one embodiment, the first signal and the second signal belong to the same BWP (BandWidth Part) in the first serving cell.

As one embodiment, the first signal and the second signal belong to different BWPs in the first serving cell.

As one embodiment, the first signaling group includes more than one signaling and the first signal and the second signal are respectively scheduled by different signaling in the first signaling group.

As one embodiment, the first signaling group includes more than one signaling, the first signal and the second signal are respectively scheduled by different signaling in the first signaling group, and the first signal and the second signal are respectively scheduled to carry different transport blocks.

As one embodiment, the first signaling group includes more than one signaling, the first signal and the second signal are respectively scheduled by different signaling in the first signaling group, and the first signal and the second signal are respectively scheduled to carry part or all of the code blocks in different transport blocks.

As one embodiment, the first signaling group includes more than one signaling, the first signal and the second signal are respectively scheduled by different signaling in the first signaling group, and the first signal and the second signal are respectively scheduled to carry part or all of the code blocks in the same transport block.

As one embodiment, the first signal and the second signal are scheduled by the same signaling; the first signal and the second signal are scheduled to carry part or all of the code blocks in the same transport block.

As one embodiment, when the first signaling group includes more than one signaling, the first signal and the second signal are respectively scheduled by different signaling in the first signaling group and the first signal and the second signal are respectively scheduled to carry part or all of the code blocks in different transport blocks; when the first signal and the second signal are scheduled by the same signaling, the first signal and the second signal are scheduled to carry part or all of the code blocks in the same transport block.

As one embodiment, a given signal includes at least one of the first signal or the second signal, and the phrase "the given signal carries a given bit block" includes: The given bit block is sequentially subjected to CRC Insertion, Channel Coding, Rate Matching, Scrambling, Modulation, Layer Mapping, Precoding, Mapping to Resource Element, OFDM Baseband Signal Generation, and Modulation and Upconversion to obtain the given signal.

As one embodiment, a given signal includes at least one of the first signal or the second signal, and the phrase "the given signal carries a given bit block" includes: The given bit block is sequentially subjected to CRC Insertion, Channel Coding, Rate Matching, Scrambling, Modulation, Layer Mapping, Precoding, Mapping to Virtual Resource Blocks, Mapping from Virtual to Physical Resource Blocks, OFDM Baseband Signal Generation, and Modulation and Upconversion to obtain the given signal.

As one embodiment, a given signal includes at least one of the first signal or the second signal, and the phrase "the given signal carries a given bit block" includes: The given bit block is sequentially subjected to CRC Insertion, Segmentation, encoding block-level CRC Insertion, Channel Coding, Rate Matching, Concatenation, Scrambling, Modulation, Layer Mapping, Precoding, Mapping to Resource Element, OFDM Baseband Signal Generation, and Modulation and Upconversion to obtain the given signal.

As one embodiment, the first signal and the second signal are scheduled by the same signaling and the first signaling group includes the same signaling that schedules the first signal and the second signal.

As one embodiment, the first signaling group includes at least one signaling and the first signal and the second signal are scheduled by the same signaling.

As one embodiment, the first signaling group includes physical layer signaling.

As one embodiment, the first signaling group includes at least one of physical layer signaling or higher layer signaling.

As one embodiment, the first signaling group includes at least one of DCI (Downlink Control Information) signaling or RRC signaling.

As one embodiment, the first signaling group includes only one signaling and the first signaling group is physical layer signaling.

As one embodiment, the first signaling group includes only one signaling and the first signaling group is DCI signaling.

As one embodiment, the first signaling group includes only one signaling and the first signaling group is higher layer signaling.

As one embodiment, the first signaling group includes only one signaling and the first signaling group is RRC signaling.

As one embodiment, the first signaling group includes more than one signaling and any signaling in the first signaling group is physical layer signaling.

As one embodiment, the first signaling group includes more than one signaling and any signaling in the first signaling group is DCI signaling.

As one embodiment, the first signaling group includes more than one signaling and the first signaling group includes at least one of physical layer signaling or higher layer signaling.

As one embodiment, the first signaling group includes more than one signaling and the first signaling group includes at least one of DCI or RRC signaling.

As one embodiment, the first serving cell is a serving cell to which the first signaling group belongs.

As one embodiment, the first signal and the second signal are scheduled by the same signaling and the first signaling group includes the same signaling that schedules the first signal and the second signal.

As one sub-embodiment of the above embodiment, the same signaling scheduling the first signal and the second signal indicates the first serving cell.

As one sub-embodiment of the above embodiment, the same signaling scheduling the first signal and the second signal includes a first field and the first field in the same signaling scheduling the first signal and the second signal indicates the first serving cell.

As one sub-embodiment of the above embodiment, the same signaling scheduling the first signal and the second signal includes a first field and a second field, the first field in the same signaling scheduling the first signal and the second signal indicates the first serving cell, and the second field in the same signaling scheduling the first signal and the second signal indicates the first BWP; the first field includes at least one bit and the second field includes at least one bit.

As one embodiment, the first signaling group includes only one signaling and the first signaling group indicates the first serving cell.

As one embodiment, the first signaling group includes only one signaling, the first signaling group includes a first field, and the first field in the first signaling group indicates the first serving cell.

As one embodiment, the first signal and the second signal both belong to a first BWP in the first serving cell; the first signaling group includes only one signaling, the first signaling group includes a first field and a second field, the first field in the first signaling group indicates the first serving cell, and the second field in the first signaling group indicates the first BWP; the first field includes at least one bit and the second field includes at least one bit.

As one embodiment, the first signaling group includes more than one signaling and each signaling in the first signaling group indicates the first serving cell.

As one embodiment, the first signaling group includes more than one signaling, any signaling in the first signaling group includes a first field, and the first field in any signaling in the first signaling group indicates the first serving cell.

As one embodiment, the first signal and the second signal both belong to a first BWP in the first serving cell; the first signaling group includes more than one signaling, any signaling in the first signaling group includes a first field and a second field, the first field in any signaling in the first signaling group indicates the first serving cell, and the second field in any signaling in the first signaling group indicates the first BWP; the first field includes at least one bit and the second field includes at least one bit.

As one embodiment, the first field is a carrier indictor field.

As one embodiment, the second field is a bandwidth part indicator field.

As one embodiment, carrier indictor field is specifically defined in Section 7.3 of 3GPP TS38.212.

As one embodiment, bandwidth part indictor field is specifically defined in Section 7.3 of 3GPP TS38.212.

As one embodiment, the first signaling group includes a first signaling and a second signaling, the first signal is a PDSCH scheduled by the first signaling, and the second signal is a PDSCH scheduled by the second signaling.

As one embodiment, the first signal and the second signal are scheduled by the same signaling and the first signaling group includes the same signaling scheduling the first signal and the second signal; the first signaling group is used for scheduling PDSCH, the first signal and the second signal are scheduled for carrying a first bit block, and the first bit block includes part or all of the code blocks of a transport block.

As one embodiment, the first signaling group includes a first signaling and a second signaling, the first signal is a PUSCH scheduled by the first signaling, and the second signal is a PUSCH scheduled by the second signaling.

As one embodiment, the first signal and the second signal are scheduled by the same signaling and the first signaling group includes the same signaling scheduling the first signal and the second signal; the first signaling group is used for scheduling PUSCH, the first signal and the second signal are scheduled for carrying a first bit block, and the first bit block includes part or all of the code blocks of a transport block.

As one embodiment, the first signaling group includes a first signaling and a second signaling, the first signal is a PDSCH scheduled by the first signaling, and the second signal is a PDSCH scheduled by the second signaling; or the first signal and the second signal are scheduled by the same signaling, the first signaling group includes the same signaling scheduling the first signal and the second signal, the first signaling group is used for scheduling PDSCH, the first signal and the second signal are scheduled for carrying a first bit block, and the first bit block includes part or all of the code blocks of a transport block.

As one embodiment, the first signaling group includes a first signaling and a second signaling, the first signal is a PUSCH scheduled by the first signaling, and the second signal is a PUSCH scheduled by the second signaling; or the first signal and the second signal are scheduled by the same signaling, the first signaling group includes the same signaling scheduling the first signal and the second signal, the first signaling group is used for scheduling PUSCH, the first signal and the second signal are scheduled for carrying a first bit block, and the first bit block includes part or all of the code blocks of a transport block.

As one embodiment, the first signaling group includes a first signaling and a second signaling and the first signal and the second signal are scheduled by the first signaling and the second signaling, respectively.

As one embodiment, the first signal and the second signal are scheduled by the same signaling and the first signaling group includes the same signaling scheduling the first signal and the second signal; the first signal and the second signal are scheduled for carrying a first bit block and the first bit block includes part or all of the code blocks of a transport block.

As one embodiment, the first signaling group includes a first signaling and a second signaling, the first signal is a PDSCH scheduled by the first signaling, and the second signal is a PDSCH scheduled by the second signaling; or the first signal and the second signal are scheduled by the same signaling, the first signaling group includes the same signaling scheduling the first signal and the second signal, the first signaling group is used for scheduling PDSCH, the first signal and the second signal are scheduled to carry a first bit block, and the first bit block includes part or all of the code blocks of a transport block; or the first signaling group includes a first signaling and a second signaling, the first signal is a PUSCH scheduled by the first signaling, and the second signal is a PUSCH scheduled by the second signaling; or the first signal and the second signal are scheduled by the same signaling, the first signaling group includes the same signaling scheduling the first signal and the second signal, the first signaling group is used for scheduling PUSCH, the first signal and the second signal are scheduled to carry a first bit block, and the first bit block includes part or all of the code blocks of a transport block.

As one embodiment, the first signal and the second signal are scheduled by the same signaling; when the first signaling group is used for scheduling PDSCH, the first signal and the second signal belong to the same PDSCH transmission occasion.

As one embodiment, the first signal and the second signal are scheduled by the same signaling; when the first signaling group is used for scheduling PDSCH, the first signal and the second signal belong to the same PDSCH transmission occasion or the same PDSCH repetition.

As one embodiment, the first signal and the second signal are scheduled by the same signaling; when the first signaling group is used for scheduling PDSCH, the first signal and the second signal belong to two separate PDSCH transmission occasions.

As one embodiment, the first signal and the second signal are scheduled by the same signaling; when the first signaling group is used for scheduling PDSCH, the first signal and the second signal belong to two separate PDSCH transmission occasions or PDSCH repetitions.

As one embodiment, the first signal and the second signal are scheduled by the same signaling; when the first signaling group is used for scheduling PUSCH, the first signal and the second signal belong to the same PUSCH transmission occasion.

As one embodiment, the first signal and the second signal are scheduled by the same signaling; when the first signaling group is used for scheduling PUSCH, the first signal and the second signal belong to the same PUSCH transmission occasion or the same PUSCH repetition.

As one embodiment, the first signal and the second signal are scheduled by the same signaling; when the first signaling group is used for scheduling PUSCH, the first signal and the second signal belong to two separate PUSCH transmission occasions.

As one embodiment, the first signal and the second signal are scheduled by the same signaling; when the first signaling group is used for scheduling PUSCH, the first signal and the second signal belong to two separate PUSCH transmission occasions or two PUSCH repetitions.

As one embodiment, the first signal and the second signal are scheduled by the same signaling; when the first signaling group is used for scheduling PDSCH, the first signal and the second signal belong to the same PDSCH repetition.

As one embodiment, the first signal and the second signal are scheduled by the same signaling; when the first signaling group is used for scheduling PDSCH, the first signal and the second signal belong to two separate PDSCH repetitions.

As one embodiment, the first signal and the second signal are scheduled by the same signaling; when the first signaling group is used for scheduling PUSCH, the first signal and the second signal belong to the same PUSCH repetition.

As one embodiment, the first signal and the second signal are scheduled by the same signaling; when the first signaling group is used for scheduling PUSCH, the first signal and the second signal belong to two separate PUSCH repetitions.

Typically, when the first signaling group is used for scheduling PUSCH, the processing includes sending, the spatial characteristic includes at least one of a spatial domain transmit filter, a spatial parameter, an antenna port, or a precoding.

As one embodiment, the first reference signal resource and the second reference signal resource are indicated by physical layer signaling.

As one embodiment, the first reference signal resource and the second reference signal resource are indicated by DCI signaling.

As one embodiment, the first reference signal resource and the second reference signal resource are configured by RRC signaling.

As one embodiment, the first reference signal resource and the second reference signal resource are activated by MAC CE signaling.

As one embodiment, the first signaling group is used to indicate the first reference signal resource and the second reference signal resource.

As one embodiment, the first signal and the second signal are scheduled by the same signaling, the first signaling group includes the same signaling scheduling the first signal and the second signal, and the same signaling scheduling the first signal and the second signal is used to indicate the first reference signal resource and the second reference signal resource.

As one sub-embodiment of the above embodiment, the same signaling scheduling the first signal and the second signal indicates an index of the first reference signal resource and an index of the second reference signal resource.

As one sub-embodiment of the above embodiment, the same signaling scheduling the first signal and the second signal includes a third field and the third field in the same signaling scheduling the first signal and the second signal is used to indicate the first reference signal resource and the second reference signal resource.

As one sub-embodiment of the above embodiment, the same signaling scheduling the first signal and the second signal includes a third field and a fourth field and the third field and the fourth field in the same signaling scheduling the first signal and the second signal are used to indicate the first reference signal resource and the second reference signal resource.

As one sub-embodiment of the above embodiment, the same signaling scheduling the first signal and the second signal includes a third field, the third field in the same signaling scheduling the first signal and the second signal indicates a first TCI state and a second TCI state, and the first TCI state and the second TCI state respectively indicate the first reference signal resource and the second reference signal resource.

As one sub-embodiment of the above embodiment, the same signaling scheduling the first signal and the second signal includes a third field and a fourth field, the third field and the fourth field in the same signaling scheduling the first signal and the second signal respectively indicate a first TCI state and a second TCI state, and the first TCI state and the second TCI state respectively indicate the first reference signal resource and the second reference signal resource.

As one embodiment, the first signaling group includes a first signaling and a second signaling, the first signal and the second signal are scheduled by the first signaling and the second signaling, respectively, and the first signaling and the second signaling are used to indicate the first reference signal resource and the second reference signal resource, respectively.

As one sub-embodiment of the above embodiment, the first signaling and the second signaling respectively indicate an index of the first reference signal resource and an index of the second reference signal resource.

As one sub-embodiment of the above embodiment, the first signaling and the second signaling respectively indicate a first TCI state and a second TCI state and the first TCI state and the second TCI state respectively indicate the first reference signal resource and the second reference signal resource.

As one sub-embodiment of the above embodiment, the first signaling and the second signaling both include a third field and the third field in the first signaling and the third field in the second signaling are used to indicate the first reference signal resource and the second reference signal resource, respectively.

As one sub-embodiment of the above embodiment, the first signaling and the second signaling both include a third field, the third field in the first signaling and the third field in the second signaling respectively indicate a first TCI state and a second TCI state, and the first TCI state and the second TCI state respectively indicate the first reference signal resource and the second reference signal resource.

As one embodiment, signaling outside of the first signaling group is used to indicate the first reference signal resource and the second reference signal resource.

As one embodiment, the phrase "a given reference signal resource is used to determine the spatial characteristic of a target signal" includes: the first signaling group is used for scheduling PDSCH and the given reference signal resource and a DMRS of the PDSCH occupied by the target signal are quasi co-located.

As one embodiment, the phrase "the given reference signal resource and a DMRS of the PDSCH occupied by the target signal are quasi co-located" includes: the given reference signal resource is a downlink reference signal resource and the same QCL parameter is used for receiving the given reference signal resource and receiving the DMRS of the PDSCH occupied by the target signal.

As one embodiment, the phrase "the given reference signal resource and a DMRS of the PDSCH occupied by the target signal are quasi co-located" includes: the given reference signal resource is an uplink reference signal resource, the same QCL parameter is used for sending the given reference signal resource and receiving the DMRS of the PDSCH occupied by the target signal, and the QCL parameter includes a spatial parameter or a spatial filter.

As one embodiment, the phrase "a given reference signal resource is used to determine the spatial characteristic of a target signal" includes: the first signaling group is used for scheduling PDSCH, the given reference signal resource is a downlink reference signal resource, and the same QCL parameter is used for receiving the given reference signal resource and receiving the target signal.

As one embodiment, the phrase "a given reference signal resource is used to determine the spatial characteristic of a target signal" includes: the first signaling group is used for scheduling PDSCH, the given reference signal resource is a downlink reference signal resource, and the same QCL parameter is used for sending the given reference signal resource and sending the target signal.

As one embodiment, the phrase "a given reference signal resource is used to determine the spatial characteristic of a target signal" includes: the first signaling group is used for scheduling PDSCH, the given reference signal resource is an uplink reference signal resource, the same QCL parameter is used for sending the given reference signal resource and receiving the target signal, and the QCL parameter includes a spatial parameter or a spatial filter.

As one embodiment, the phrase "a given reference signal resource is used to determine the spatial characteristic of a target signal" includes: the first signaling group is used for scheduling PDSCH, the given reference signal resource is an uplink reference signal resource, the same QCL parameter is used for receiving the given reference signal resource and sending the target signal, and the QCL parameter includes a spatial parameter or a spatial filter.

As one embodiment, the phrase "a given reference signal resource is used to determine the spatial characteristic of a target signal" includes: the first signaling group is used for scheduling PUSCH and the given reference signal resource and a DMRS of the PUSCH occupied by the target signal are quasi co-located.

As one embodiment, the phrase "the given reference signal resource and a DMRS of the PUSCH occupied by the target signal are quasi co-located" includes: the given reference signal resource is a downlink reference signal resource and the same spatial characteristic is used to receive the given reference signal resource and send the DMRS of the PUSCH occupied by the target signal; the spatial characteristic includes at least one of a spatial domain filter, a spatial parameter, an antenna port, or a precoding.

As one embodiment, the phrase "the given reference signal resource and a DMRS of the PDSCH occupied by the target signal are quasi co-located" includes: the given reference signal resource is an uplink reference signal resource and the same spatial characteristic is used to send the given reference signal resource and send the DMRS of the PUSCH occupied by the target signal; the spatial characteristic includes at least one of a spatial domain transmit filter, a spatial parameter, an antenna port, or a precoding.

As one embodiment, the phrase "a given reference signal resource is used to determine the spatial characteristic of a target signal" includes: the first signaling group is used for scheduling PUSCH, the given reference signal resource is a downlink reference signal resource, and the same spatial characteristic is used for receiving the given reference signal resource and sending the target signal.

As one embodiment, the phrase "a given reference signal resource is used to determine the spatial characteristic of a target signal" includes: the first signaling group is used for scheduling PUSCH, the given reference signal resource is a downlink reference signal resource, and the same spatial characteristic is used for sending the given reference signal resource and receiving the target signal.

As one embodiment, the phrase "a given reference signal resource is used to determine the spatial characteristic of a target signal" includes: the first signaling group is used for scheduling PUSCH, the given reference signal resource is an uplink reference signal resource, and the same spatial characteristic is used for sending the given reference signal resource and sending the target signal.

As one embodiment, the phrase "a given reference signal resource is used to determine the spatial characteristic of a target signal" includes: the first signaling group is used for scheduling PUSCH, the given reference signal resource is an uplink reference signal resource, and the same spatial characteristic is used for receiving the given reference signal resource and receiving the target signal.

As one embodiment, the given reference signal resource is the first reference signal resource and the target signal is the first signal.

As one embodiment, the given reference signal resource is the second reference signal resource and the target signal is the second signal.

As one embodiment, the uplink reference signal resource includes an SRS resource.

As one embodiment, the uplink reference signal resource includes at least one of an SRS resource or UL DMRS.

As one embodiment, the downlink reference signal resource includes at least one of a CSI-RS (Channel State Information Reference Signal) resource or an SS/PBCH (Synchronization Signal/Physical Broadcast Channel) block resource.

As one embodiment, the downlink reference signal resource includes a CSI-RS resource.

As one embodiment, a TCI (transmission configuration identification) state indicates a quasi co-location relationship.

As one embodiment, one TCI state indicates one or more reference signal resources.

As one embodiment, one TCI state indicates at least one reference signal resource.

As one embodiment, any reference signal resource indicated by a TCI state is one of an SES (Sounding Reference Signal), a CSI-RS (Channel State Information Reference Signal) resource, or an SS/PBCH (Synchronization Signal/Physical Broadcast Channel) block resource.

As one embodiment, any reference signal resource indicated by a TCI state is a CSI-RS resource or an SS/PBCH block resource.

As one embodiment, a TCI state indicates at least one reference signal resource and a QCL (Quasi Co-Located) parameter corresponding to each reference signal resource.

As one embodiment, a TCI state indicates at least one reference signal resource and the type of QCL parameter corresponding to each reference signal resource.

As one embodiment, the type of the QCL parameter includes Type A, Type B, Type C, and Type D.

As one embodiment, the QCL parameters of type Type A include Doppler shift, Doppler spread, average delay, and delay spread.

As one embodiment, the QCL parameters of type Type B include Doppler shift and Doppler spread.

As one embodiment, the QCL parameters of type Type C include Doppler shift and average delay.

As one embodiment, the QCL parameters of type Type D include Spatial Rx parameter.

As one embodiment, Type A, Type B, Type C, and Type D are specifically defined in Section 5.1.5 of 3GPP TS38.214.

As one embodiment, the QCL parameters include one or more of delay spread, Doppler spread, Doppler shift, average delay, or spatial Rx parameter.

As one embodiment, the QCL parameters include Doppler shift and Doppler spread.

As one embodiment, the QCL parameters include Doppler shift and average delay.

As one embodiment, the QCL parameters include Spatial Rx parameters.

As one embodiment, the QCL parameters include at least one of a spatial transmission parameter or spatial Rx parameter.

As one embodiment, the QCL parameters include Spatial Domain Receive Filter.

As one embodiment, the QCL parameters include Spatial Domain Filter.

As one embodiment, the QCL parameters include at least one of spatial domain transmit filter or spatial domain receive filter.

Embodiment 2

Embodiment 2 exemplifies a schematic diagram of a network architecture according to one embodiment of the present application, as shown in FIG. 2.

FIG. 2 illustrates a network architecture 200 of an LTE (Long-Term Evolution), LTE-A (Long-Term Evolution Advanced), and future 5G system. The network architecture 200 of LTE, LTE-A, and future 5G system is called EPS (Evolved Packet System) 200. The 5G NR or LTE network architecture 200 may be referred to as 5GS (5G System)/EPS (Evolved Packet System) 200 or some other suitable term. The 5GS/EPS 200 may include one or more UE (User Equipment) 201, one UE 241 for sidelink communication with UE 201, an NG-RAN (next generation wireless access network) 202, a 5GC (5G CoreNetwork)/EPC (Evolved Packet Core) 210, an HSS (Home Subscriber Server)/UDM (Unified Data Management) 220, and an Internet service 230. The 5GS/EPS 200 may be interconnected with other access networks, but these entities/interfaces are not shown for simplicity. As shown in FIG. 2, the 5GS/EPS 200 provides packet exchange services. However, it will be readily understood by those skilled in the art that various concepts presented throughout the present application can be extended to a network providing circuit exchange services. The NG-RAN 202 includes an NR (New Radio) node B (gNB) 203 and another gNB 204. The gNB 203 provides user and control plane protocol termination towards the UE 201. The gNB 203 may be connected to the other gNB 204 via an Xn interface (e.g., backhaul). The gNB 203 may also be referred to as a base station, a base station transceiver, a radio base station, a radio transceiver, a transceiver function, a base service set (BSS), an extension service set (ESS), a TRP (transmitter receiver point), or some other suitable term. The gNB 203 provides access points to the 5GC/EPC 210 for the UE 201. Embodiments of the UE 201 include cellular phones, smart phones, session initiation protocol (SIP) phones, laptop computers, personal digital assistants (PDA), satellite radios, global positioning systems, multimedia devices, video devices, digital audio players (e.g., MP3 players), cameras, game consoles, drones, aircrafts, narrow band physical network devices, machine type communications devices, land vehicles, automobiles, wearable devices, or any other similar function devices. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, a user agent, a mobile client, a client, or some other suitable term. The gNB 203 is connected to the 5GC/EPC 210 via an S1/NG interface. The 5GC/EPC 210 includes an MME (Mobility Management Entity)/AMF (Authentication Management Field)/SMF (Session Management Function) 211, another MME/AMF/SMF214, an S-GW (Service Gateway)/UPF (User Plane Function) 212, and a P-GW (Packet Data Network Gateway)/UPF 213. The MME/AMF/SMF 211 is a control node that processes signaling between the UE 201 and the 5GC/EPC 210. Generally, the MME/AMF/SmF 211 provides carrier and connection management. All user IP (Internet Protocol) packets are transmitted via the S-GW/UPF 212, which is itself connected to the P-GW/UPF 213. The P-GW provides UE IP address assignment along with other functions. The P-GW/UPF 213 is connected to the Internet service 230. The Internet service 230 includes an operator's corresponding Internet protocol service, which may include, inter alia, the Internet, an intranet, an IMS (IP Multimedia Subsystem), and a Packet switching service.

As one embodiment, the first node in the present application includes the UE 201.

As one embodiment, the second node in the present application includes the gNB 203.

### Embodiment 3

Embodiment 3 exemplifies a schematic diagram of an embodiment of a wireless protocol architecture for a user plane and a control plane according to one embodiment of the present application, as shown in FIG. 3.

Embodiment 3 shows a schematic diagram of an embodiment of a wireless protocol architecture for a user plane and a control plane according to one embodiment of the present application, as shown in FIG. 3. FIG. 3 is a schematic diagram illustrating an embodiment of a radio protocol architecture for a user plane 350 and a control plane 300, and FIG. 3 shows, with three layers, a radio protocol architecture for a control plane 300 between a first communication node device (RSU in UE, gNB, or V2X) and a second communication node device (RSU in gNB, UE, or V2X), or between two UEs: layers 1, 2, and 3. The layer 1 (L1 layer) is the lowest layer and implements various PHY (physical layer) signal processing functions. The L1 layer will be referred to herein as PHY 301. The layer 2 (L2 layer) 305 is over the PHY 301 and is responsible for the link between the first communication node device and the second communication node device or between two UEs. The L2 layer 305 includes a MAC (Medium Access Control) sublayer 302, an RLC (Radio Link Control) sublayer 303, and a PDCP (Packet Data Convergence Protocol) sublayer 304, and these sublayers terminate at the second communication node device. The PDCP sublayer 304 provides multiplexes between different radio carriers and logical channels. The PDCP sublayer 304 also provides security by encrypting the data packet and trans-regional movement support for the first communication node device between the second communication node device. The RLC sublayer 303 provides segmentation and reassembly of the upper layer data packet, retransmission of the missing data packet, and reordering of the data packet to compensate for out-of-order reception due to HARQ. The MAC sublayer 302 provides multiplex between logical and transmission channels. The MAC sublayer 302 is also responsible for distributing various radio resources (e.g., resource blocks) in one cell between the first communication node devices. The MAC sublayer 302 is also responsible for HARQ operations. The RRC (Radio Resource Control) sublayer 306 in layer 3 (L3 layer) in the control plane 300 is responsible for obtaining the radio resources (i.e., radio carrier) and configuring the lower layer using RRC signaling between the second communication node device and the first communication node device. The radio protocol architecture of the user plane 350 includes a layer 1 (L1 layer) and a layer 2 (L2 layer). The radio protocol architecture for the first and second communication node devices in the user plane 350 for the physical layer 351, the PDCP sublayer 354 in the L2 layer 355, the RLC sublayer 353 in the L2 layer 355, and the MAC sublayer 352 in the L2 layer 355 is substantially the same as the corresponding layer and the sublayer in the control plane 300. However, the PDCP sublayer 354 also provides header compression for upper layer data packets to reduce radio transmission overhead. The L2 layer 355 in the user plane 350 also includes an SDAP (Service Data Adaption Protocol) sublayer 356 that is responsible for mapping between QoS streams and data radio bearer (DRB) to support diversity of services. Although not shown, the first communication node device may have several upper layers over the L2 layer 355, including a network layer (e.g., an IP layer) that terminates at the P-GW on the network side and an application layer that terminates at the other end of the connection (e.g., a far-end UE, a server, etc.).

As one embodiment, the wireless protocol architecture in FIG. 3 applies to the first node in the present application.

As one embodiment, the wireless protocol architecture in FIG. 3 applies to the second node in the present application.

As one embodiment, the first signaling is generated in the PHY 301 or the PHY 351.

As one embodiment, the first signaling group is generated in the RRC sublayer 306.

As one embodiment, the first signaling is generated in at least one of the PHY 301, the PHY 351, or the RRC sublayer 306.

As one embodiment, the first signal and the second signal are generated in the PHY 301 or the PHY 351.

**Embodiment 4**

Embodiment 4 exemplifies a schematic diagram of a first communications device and a second communications device according to one embodiment of the present application, as shown in FIG. 4. FIG. 4 is a block diagram of a first communications device 410 and a second communications device 450 in communication with one another over an access network.

The first communications device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communications device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In a transmission from the first communications device 410 to the second communications device 450, at the first communications device 410, an upper layer data packet from the core network is provided to the controller/processor 475. The controller/processor 475 implements the functionality of the L2 layer. In the DL, the controller/processor 475 provides header compression, encryption, packet segmentation and reordering, multiplexing between logical and transmission channels, and radio resource allocation to the second communications device 450 based on various priority measures. The controller/processor 475 is also responsible for HARQ operation, retransmission of the lost package, and signaling to the second communications device 450. The transmission processor 416 and the multi-antenna transmission processor 471 implement various signal processing functions for the L1 layer (i.e., the physical layer). The transmitting processor 416 implements coding and interleaving to facilitate forward error correction (FEC) at the second communications device 450, as well as a constellation mapping based on various modulation schemes (e.g., bi-phase shift keying (BPSK), orthogonal phase shift keying (QPSK), M-phase shift keying (M-PSK), or M-quadrature amplitude modulation (M-QAM)). The multi-antenna transmitting processor 471 pre-codes encoded and modulated symbols in digital space, including codebook-based pre-coding and non-codebook-based pre-coding, and beam-forming processing to generate one or more parallel streams. The transmitting processor 416 then maps each parallel stream to the sub-carrier, juxtaposes the modulated symbol with a reference signal (e.g., frequency direct) in the time and/or frequency domain, and then uses an inverse fast Fourier transform (IFFT) to produce a physical channel that carries the time domain multi-carrier symbol flow. The multi-antenna transmitting processor 471 then sends the simulated pre-coding/beam-forming operation for the time domain multi-carrier symbol flow. Each transmitter 418 converts the baseband multi-carrier symbol flow provided by the multi-antenna transmitting processor 471 into a radio frequency flow, which is then provided to a different antenna 420.

In transmission from the first communications device 410 to the second communications device 450, at the second communications device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor 456 and the multi-antenna receiving processor 458 implement various signal processing functions of the L1 layer. The multi-antenna receiving processor 458 receives the simulated pre-coding/beam-forming operation for the baseband multi-carrier symbol flow from the receiver 454. The receiving processor 456 uses a Fast Fourier Transform (FFT) to transition the baseband multi-carrier symbol flow from the time domain to the frequency domain after receiving the simulated pre-coding/-beam-forming operation. In the frequency domain, the physical layer data signal and the reference signal are demultiplexed by the receiving processor 456 where the reference signal is used for channel estimation and the data signal is detected by the multi-antenna receiving processor 458 to recover any parallel stream destined for the second communications device 450. The symbols on each parallel stream are demodulated and restored in the receiving processor 456 and generate a soft decision. The receiving processor 456 then decodes and de-interleaves the soft decision to resume the upper layer data and control signal transmitted by the first communications device 410 over the physical channel. The upper layer data and control signal are then provided to the controller/processor 459. The controller/processor 459 implements the functions of the L2 layer. The controller/processor 459 may be associated with a memory 460 that stores program code and data. The memory 460 may be referred to as a computer-readable medium. In the DL, the controller/processor 459 provides demultiplexing between transmission and logical channels, packet reassembly, decryption, header decompression, and control signal processing to recover the upper layer data packet from the core network. The upper layer data packet is then provided to all protocol layers above the L2 layer. Various control signals may also be provided to L3 for L3 processing. The controller/processor 459 is also responsible for error detection using the Acknowledge (ACK) and/or Negative Acknowledge (NACK) protocols to support HARQ operations.

In transmission from the second communications device 450 to the first communications device 410, at the second communications device 450, the data source 467 is used to provide the upper layer data packet to the controller/processor 459. The data source 467 represents all protocol layers above the L2 layer. Similar to the transmission function at the first communications device 410 described in the DL, the controller/processor 459 implements header compression, encryption, packet segmentation, reordering, and multiplexing between logical and transmission channels based on wireless resource allocation of the first communications device 410, implementing L2 layer functions for the user plane and control plane. The controller/processor 459 is also responsible for HARQ operation, retransmission of the lost package, and signaling to the first communications device 410. The transmitting processor 468 executes a modulation mapping, channel encoding, and the multiantenna transmitting processor 457 pre-encodes the digital multi-antenna space, including codebook-based pre-coding and non-codebook-based pre-coding, and beam-forming processing, and then the transmitting processor 468 modulates the resulting parallel stream into multi-carrier/single-carrier symbol flows, which, after simulated precoding/beam-forming operations in the multiantenna transmitting processor 457, are then provided to a different antenna 452 via the transmitter 454. Each transmitter 454 first converts the baseband symbol flow provided by the multi-antenna transmitting processor 457 into a radio frequency symbol flow, which is then provided to the antenna 452.

In the transmission from the second communications device 450 to the first communications device 410, the function at the first communications device 410 is similar to the receiving function at the second communications device 450 described in the transmission from the first communications device 410 to the second communications device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/-processor 475 implements the function of the L2 layer. The controller/processor 475 may be associated with the memory 476 storing program code and data. The memory 476 may be referred to as a computer-readable medium. The controller/processor 475 provides demultiplexing between transmission and logical channels, packet reassembly, decryption, header decompression, and control signal processing to recover the upper layer data packet from the second communications device 450. The upper layer data packet from the controller/-processor 475 may be provided to the core network. The controller/processor 475 is also responsible for error detection using the ACK and/or NACK protocols to support HARQ operations.

As one embodiment, the second communications device 450 includes: at least one processor, and at least one memory comprising computer program code; the at least one memory and the computer program code configured for use with the at least one processor. The second communications device 450 apparatus at least: receives a first signaling group, and the first signaling group is used for scheduling a first signal and a second signal **in** a first serving cell; wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed depends on whether a first condition is met; and when the first condition is met, the target signal is processed; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

As one embodiment, the second communications device 450 includes: a memory storing a computer-readable instruction program that, when executed by at least one processor, generates an action, the action comprising: receiving a first signaling group, and the first signaling group is used for scheduling a first signal and a second signal **in** a first serving cell; wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed depends on whether a first condition is met; and when the first condition is met, the target signal is processed; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

As one embodiment, the first communications device 410 includes: at least one processor and at least one memory comprising computer program code; the at least one memory and the computer program code configured for use with the at least one processor. The first communications device 410 apparatus at least: sends a first signaling group, and the first signaling group is used for scheduling a first signal and a second signal **in** a first serving cell; wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed by the receiver of the first signaling group depends on whether a first condition is met; and when the first condition is met, the target signal is processed by the receiver of the first signaling group; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

As one embodiment, the first communications device 410 includes: a memory storing a computer-readable instruction program that, when executed by at least one processor, generates an action, the action comprising: sending a first signaling group, and the first signaling group is used for scheduling a first signal and a second signal in a first serving cell; wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed by the receiver of the first signaling group depends on whether a first condition is met; and when the first condition is met, the target signal is processed by the receiver of the first signaling group; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

As one embodiment, the first node in the present application includes the second communications device 450. As one embodiment, the second node in the present application includes the first communications device 410.

As one embodiment, at least one of {the antenna 452, the receiver 454, the receiving processor 456, the multi-antenna receiving processor 458, the controller/processor 459, the memory 460, the data source 467} is used to receive the first signaling group in the present application; at least one of {the antenna 420, the transmitter 418, the transmitting processor 416, the multi-antenna transmitting processor 471, the controller/processor 475, the memory 476} is used to transmit the first signaling group in the present application.

As one embodiment, the processing in the present application is receiving; at least one of {the antenna 452, the receiver 454, the receiving processor 456, the multi-antenna receiving processor 458, the controller/processor 459, the memory 460, the data source 467} is used to receive the first signal and the second signal in the present application; at least one of {the antenna 420, the transmitter 418, the transmitting processor 416, the multi-antenna transmitting processor 471, the controller/processor 475, the memory 476} is used to transmit the first signal and the second signal in the present application.

As one embodiment, the processing in the present application is sending; at least one of {the antenna 452, the transmitter 454, the transmitting processor 468, the multi-antenna transmitting processor 457, the controller/processor 459, the memory 460} is used to send the first signal and the second signal in the present application; at least one of {the antenna 420, the receiver 418, the receiving processor 470, the multi-antenna receiving processor 472, the controller/processor 475, the memory 476} is used to receive the first signal and the second signal in the present application.

## Embodiment 5

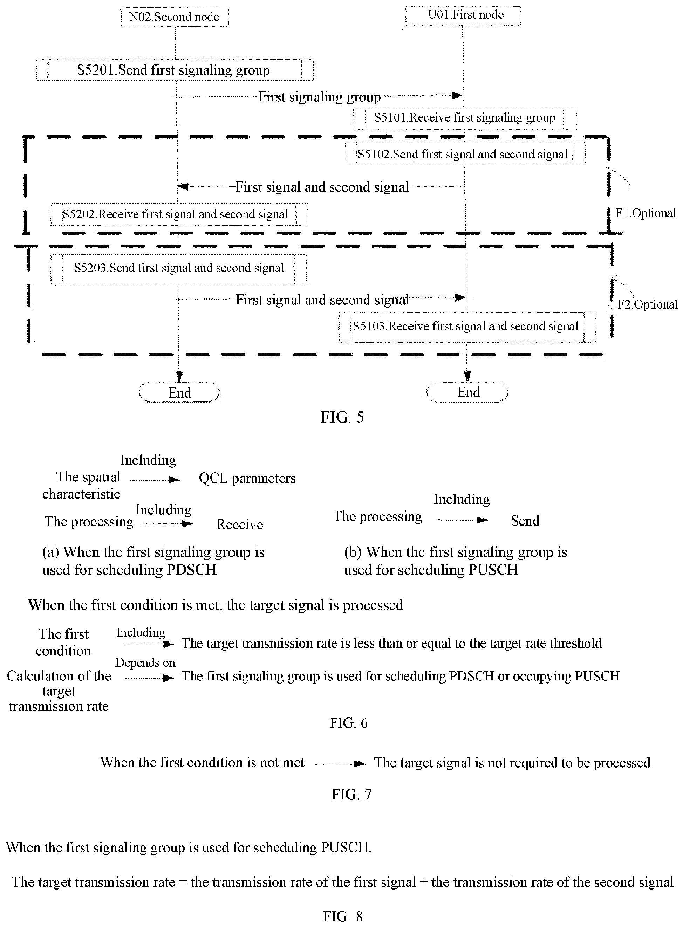

Embodiment 5 exemplifies a flow chart of wireless transmission according to one embodiment of the present application, as shown in FIG. 5. In FIG. 5, the first node U01 and the second node N02 are two communication nodes that are transmitted through an air interface, respectively; in FIG. 5, the steps in blocks F1 and F2 are optional.

For the **first node U01**, a first signaling group is received in step S5101; a first signal and a second signal are sent in step S5102; a first signal and a second signal are received in step S5103;

For the **second node N02,** a first signaling group is sent in step S5201; a first signal and a second signal are received in step S5202; and a first signal and a second signal are sent in step S5203.

In Embodiment 5, the first signaling group is used for scheduling a first signal and a second signal in a first serving cell; the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed by the first node U01 depends on whether a first condition is met; and when the first condition is met, the target signal is processed by the first node U01; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

As one embodiment, when the first signaling group is used for scheduling PUSCH and the first condition is met, block F1 is present and block F2 is not present.

As one embodiment, when the first signal and the second signal are PDSCH scheduled by the same signaling, the first signaling group includes the same signaling scheduling the first signal and the second signal, the first signal and the second signal are scheduled for carrying a first bit block, the first bit block includes part or all of the code blocks of a transport block, and the first condition is met, block F1 is not present and block F2 is present.

As one embodiment, when the first signaling group includes a first signaling and a second signaling, the first signal is a PDSCH scheduled by the first signaling, the second signal is a PDSCH scheduled by the second signaling, the first signal meets the first condition, and the second signal meets the first condition, block F1 is not present and block F2 is present.

As one embodiment, when the first signaling group is used for scheduling PUSCH and the first condition is met, the first node U01 sends the first signal and the second signal.

As one embodiment, when the first signal and the second signal are PDSCH scheduled by the same signaling, the first signaling group includes the same signaling scheduling the first signal and the second signal, the first signal and the second signal are scheduled for carrying a first bit block, the first bit block includes part or all of the code blocks of a transport block, and the first condition is met, the first node U01 receives the first signal and the second signal.

As one embodiment, when the first signaling group includes a first signaling and a second signaling, the first signal is a PDSCH scheduled by the first signaling, the second signal is a PDSCH scheduled by the second signaling, and the first signal meets the first condition, the first node U01 receives the first signal; when the first signaling group includes a first signaling and a second signaling, the first signal is a PDSCH scheduled by the first signaling, the second signal is a PDSCH scheduled by the second signaling, and the second signal meets the first condition, the first node U01 receives the second signal.

As one embodiment, a given signal is scheduled to carry a given bit block, the given bit block includes part or all of the code blocks of a given transport block, the transmission rate of the given signal is equal to a given integer divided by the duration of a given time domain resource, the given integer is linearly associated with the number of code blocks included in the given bit block, the given integer is a positive integer, and the given time domain resource is a time domain resource scheduled for the given signal.

As one sub-embodiment of the above embodiment, the given signal is either of the first signal or the second signal.

As one sub-embodiment of the above embodiment, the given signal is the first signal.

As one sub-embodiment of the above embodiment, the given signal is the second signal.

As one sub-embodiment of the above embodiment, the given signal is the target signal.

Typically, the given bit block includes part or all of the code blocks of a given transport block, the given integer is equal to the product of the number of code blocks included in the given bit block and a maximum integer not greater than a reference integer, the given integer is a positive integer, and the reference integer is equal to the number of bits included in the given transport block divided by the total number of code blocks included in the given transport block.

Typically, the scheduling signaling of the given signal indicates the given time domain resource.

Typically, the scheduling signaling of the given signal indicates the time domain resource scheduled for the given signal.

Typically, when the first signaling group is used for scheduling PUSCH and the first signal and the second signal are scheduled by the same signaling, the transmission rate of the first signal is the same as the transmission rate of the second signal and the target transmission rate is equal to the product of the transmission rate of the first signal and 2.

Typically, the duration of the given time domain resource is in seconds.

Typically, the duration of the given time domain resource is equal to the number of symbols included in the given time domain resource and the duration of one symbol in the given time domain resource.

Typically, a given time slot is a time slot to which the given time domain resource belongs and the duration of a symbol in the given time domain resource is equal to the duration of the given time slot divided by the number of symbols in the given time slot.

Typically, a given time slot is a time slot to which the given time domain resource belongs, the duration of a symbol in the given time domain resource is equal to $10^{-3}$ divided by a given integer, and the given integer is equal to the product of $2^{\mu}$ and the number of symbols in the given time slot, where $\mu$ is the numerology of the given signal and $\mu$ is a non-negative integer.

Typically, $\mu$ is the numerology of the given signal and the subcarrier spacing of the given signal is the product of $\mu$ and 15 kHz.

Typically, a transport block includes at least one code block.

As one embodiment, the given integer is $V_{j,m}$, the number of code blocks included in the given bit block is $C'$, the number of bits included in the given transport block is A, the total number of code blocks included in the given transport block is C, the reference integer is $\frac{A}{C}$, the maximum integer not greater than the reference integer is $\left\lfloor \frac{A}{C} \right\rfloor$, the number of symbols included in the given time domain resource is L, the duration of a symbol in the given time domain resource is $T_s^{\mu}$, and the duration of the given time domain resource is $L \times T_s^{\mu}$.

As one embodiment, $V_{j,m}$, $C'$, A, C, L, and $T_s^{\mu}$ are specifically defined in Section 5.1.3 of 3GPP TS38.214. As one embodiment, $V_{j,m}$, $C'$, A, C, L, and $T_s^{\mu}$ are specifically defined in Section 6.1.4 of 3GPP TS38.214.

**Embodiment 6**

Embodiment 6 exemplifies a schematic diagram of whether a target signal is processed being dependent on whether a first condition is met according to one embodiment of the present application; as shown in FIG. 6.

In Embodiment 6, when the first condition is met, the target signal is processed; when the first signaling group is used for scheduling PDSCH, the processing includes receiving and the spatial characteristic includes a QCL parameter; when the first signaling group is used for scheduling PUSCH, the processing includes sending; the first condition comprises a target transmission rate being less than or equal to a target rate threshold and the calculation of the target transmission rate depends on whether the first signaling group is used to schedule PDSCH or occupy PUSCH.

Typically, the target signal meets a second set of conditions.

Typically, at least one of the first signal or the second signal meets a second set of conditions.

Typically, if and only if the target signal meets a second set of conditions, whether the target signal is processed depends on whether a first condition is met.

Typically, if and only if at least one of the first signal or the second signal meets a second set of conditions, whether the target signal is processed depends on whether a first condition is met.

Typically, the second set of conditions includes more than one condition and the second set of conditions is met when any of the second set of conditions is met.

Typically, when the first signaling group is used for scheduling PDSCH, the second set of conditions comprises: the first serving cell is configured with the higher layer parameter processingType2Enabled and the parameter is set to "enable" or the MCS indicated by the scheduling signaling of the target signal from a candidate MCS (Modulation and Coding Scheme) set is the MCS with the maximum spectral efficiency in the candidate MCS set and the candidate MCS set includes more than one MCS.

Typically, when the first signaling group is used for scheduling PUSCH, the second set of conditions comprises: The first serving cell is configured with the higher layer parameter processingType2Enabled and the parameter is set to "enable," the MCS indicated by the scheduling signaling of the target signal from the candidate MCS set is the MCS with the maximum spectral efficiency in the candidate MCS set, or the target signal is an actual repetition in PUSCH repetition Type B.

Typically, PUSCH repetition Type B is specifically defined in Section 6 of 3GPP TS 38.214.

Typically, when the first signaling group is used for scheduling PDSCH, the processing includes receiving; when the first signaling group is used for scheduling PUSCH, the processing includes sending.

As one embodiment, if and only if the first condition is met, the target signal is processed.

As one embodiment, when the first condition is not met, the first node determines itself whether to process the target signal.

As one embodiment, when the first condition is not met, whether the first node processes the target signal is implementation-dependent.

As one embodiment, when the first signaling group is used for scheduling PUSCH and the first condition is met, the sender of the first signaling group monitors whether the first signal and the second signal are sent.

As one embodiment, when the first signaling group is used for scheduling PUSCH and the first condition is met, the sender of the first signaling group receives the first signal and the second signal.

As one embodiment, when the first signaling group is used for scheduling PUSCH and the first condition is not met, the sender of the first signaling group monitors whether the first signal and the second signal are sent.

As one embodiment, when the first signaling group is used for scheduling PUSCH and the first condition is not met, the sender of the first signaling group determines itself whether to monitor whether the first signal and the second signal are sent.

As one embodiment, when the first signaling group is used for scheduling PUSCH and the first condition is not met, whether the sender of the first signaling group monitors whether the first signal and the second signal are sent is implementation-dependent.

As one embodiment, when the first signaling group is used for scheduling PDSCH, the sender of the first signaling group sends the first signal and the second signal.

As one embodiment, when the first signaling group is used for scheduling PDSCH and the first condition is met, the sender of the first signaling group sends the first signal and the second signal.

As one embodiment, when the first signaling group is used for scheduling PDSCH and the first condition is met, the sender of the first signaling group determines itself whether to send the first signal and the second signal.

As one embodiment, when the first signaling group is used for scheduling PDSCH and the first condition is met, whether the sender of the first signaling group sends the first signal and the second signal is implementation-dependent.

Typically, the sender of the first signaling group is the second node in the present application.

As one embodiment, the calculation of the target transmission rate depends on whether the target signal is the first signal or the second signal.

As one embodiment, the calculation of the target transmission rate does not depend on whether the target signal is the first signal or the second signal.

As one embodiment, the calculation of the target transmission rate is independent of whether the target signal is the first signal or the second signal.

Typically, the target transmission rate and the target rate threshold are expressed in bits per second.

Typically, the target transmission rate and the target rate threshold are both non-negative real numbers.

Typically, the target transmission rate and the target rate threshold are both positive real numbers.

Typically, "the first signaling group is used for scheduling PDSCH or occupying PUSCH" means the same as "the first signal and the second signal are PDSCH or PUSCH."

Typically, "the first signaling group is used for scheduling PDSCH or occupying PUSCH" means the same as "the first signal and the second signal are transmitted on PDSCH or transmitted on PUSCH."

As one embodiment, the calculation of the target rate threshold depends on whether the first signaling group is used for scheduling PDSCH or for scheduling PUSCH.

As one embodiment, when the first signaling group is used for scheduling PDSCH, the target rate threshold is a first rate threshold; when the first signaling group is used for scheduling PUSCH, the target rate threshold is a second rate threshold.

Typically, the first rate threshold and the second rate threshold are calculated separately.

Typically, the first rate threshold is a maximum downlink data rate of a carrier in a frequency band of the first serving cell and the second rate threshold is a maximum uplink data rate of a carrier in a frequency band of the first serving cell.

Typically, the first rate threshold is the maximum downlink data rate of a carrier in a frequency band of the first serving cell for any signaled band combination and feature set consistent with the serving cell; the second rate threshold is the maximum uplink data rate of a carrier in a frequency band of the first serving cell for any signaled band combination and feature set consistent with the serving cell.

Typically, the target rate threshold is a maximum data rate of a carrier in a frequency band of the first serving cell.

Typically, the target rate threshold is a maximum data rate of a carrier in a frequency band of the first serving cell for any signaled band combination and feature set consistent with the serving cell.

Typically, the target rate threshold is linearly associated with the maximum number of layers supported.

Typically, the target rate threshold is linearly associated with the maximum modulation order supported.

Typically, the target rate threshold depends on at least the maximum number of layers supported and the maximum modulation order supported.

Typically, the target rate threshold is DataRateCC.

Typically, the target rate threshold is calculated according to the formula in Section 4.1.2 of 3GPP TS39.306.

As one embodiment, DataRateCC is specifically defined in Section 6.1.4 of 3GPP TS38.214.

As one embodiment, DataRateCC is specifically defined in Section 5.1.3 of 3GPP TS38.214.

### Embodiment 7

Embodiment 7 exemplifies a schematic diagram of whether a target signal is processed being dependent on whether a first condition is met according to another embodiment of the present application; as shown in FIG. 7.

In Embodiment 7, when the first condition is not met, the target signal is not required to be processed.

As one embodiment, the phrase "the target signal is not required to be processed" includes: the first node is not required to process the target signal.

As one embodiment, the phrase "the target signal is not required to be processed" includes: the target signal is not processed.

As one embodiment, the phase "the target signal is not required to be processed" includes: the first node determines itself whether to process the target signal.

As one embodiment, the phase "the target signal is not required to be processed" includes: whether the first node processes the target signal is implementation-dependent.

As one embodiment, the phrase "the target signal is not required to be processed" includes: the target receiver of the first signaling group is not required to process the target signal.

As one embodiment, the phase "the target signal is not required to be processed" includes: the target receiver of the first signaling group determines itself whether to process the target signal.

As one embodiment, the phase "the target signal is not required to be processed" includes: whether the target receiver of the first signaling group processes the target signal is implementation-dependent.

### Embodiment 8

Embodiment 8 exemplifies a schematic diagram of a target transmission rate according to one embodiment of the present application; as shown in FIG. 8.

In Embodiment 8, when the first signaling group is used for scheduling PUSCH, the target transmission rate is equal to the sum of the transmission rate of the first signal and the transmission rate of the second signal.

Typically, when the first signaling group is used for scheduling PUSCH and the first condition is met, both the first signal and the second signal are processed.

Typically, when the first signaling group is used for scheduling PUSCH and the first condition is not met, the first signal and the second signal are not required to be processed.

As one embodiment, when the first signaling group is used for scheduling PUSCH and the first signal and the second signal are scheduled by different signalings in the first signaling group, the target transmission rate is equal to the sum of the transmission rate of the first signal and the transmission rate of the second signal.

As one embodiment, when the first signaling group is used for scheduling PUSCH and the first signal and the second signal are scheduled by the same signaling, the target transmission rate is equal to the sum of the transmission rate of the first signal and the transmission rate of the second signal.

As one embodiment, when the first signaling group is used for scheduling PUSCH, the first signaling group includes a first signaling and a second signaling, the first signal is scheduled by the first signaling, and the second signal is scheduled by the second signaling, the target transmission rate is equal to the sum of the transmission rate of the first signal and the transmission rate of the second signal.

As one embodiment, when the first signal and the second signal are PUSCH scheduled by the same signaling and the first signaling group includes the same signaling scheduling the first signal and the second signal, the target transmission rate is equal to the sum of the transmission rate of the first signal and the transmission rate of the second signal.

As one embodiment, when the first signaling group is used for scheduling PUSCH, the target transmission rate is independent of whether the first signal and the second signal are scheduled by the same signaling in the first signaling group.

As one embodiment, when the first signaling group is used for scheduling PUSCH, regardless of whether the first signal and the second signal are scheduled by the same signaling in the first signaling group, the target transmission rate is equal to the sum of the transmission rate of the first signal and the transmission rate of the second signal.

### Embodiment 9

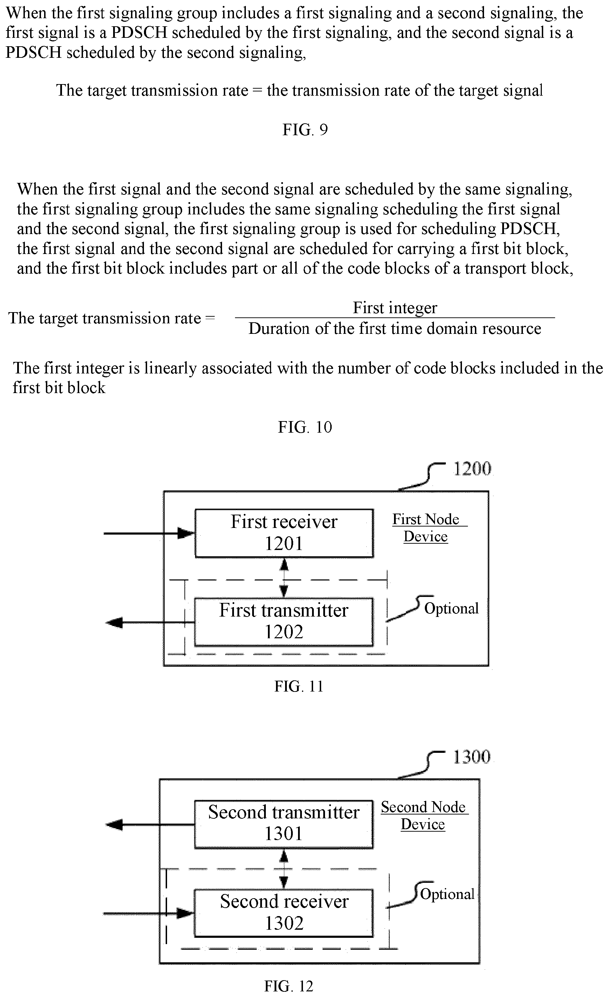

Embodiment 9 exemplifies a schematic diagram of a target transmission rate according to another embodiment of the present application; as shown in FIG. 9.

In Embodiment 9, when the first signaling group comprises a first signaling group and a second signaling group, the first signal is a PDSCH scheduled by the first signaling group, and the second signal is a PDSCH scheduled by the second signaling group, the target transmission rate is equal to the transmission rate of the target signal.

Typically, when the first signal and the second signal are PDSCH and the first signal and the second signal are scheduled by different signalings in the first signaling group, whether the first signal is processed and whether the second signal is processed are separately determined.

### Embodiment 10

Embodiment 10 exemplifies a schematic diagram of a target transmission rate according to another embodiment of the present application; as shown in FIG. 10.

In Embodiment 10, when the first signal and the second signal are scheduled by the same signaling, the first signaling group includes the same signaling scheduling the first signal and the second signal, the first signaling group is used for scheduling PDSCH, the first signal and the second signal are scheduled for carrying a first bit block, and the first bit block includes part or all of the code blocks of a transport block, the target transmission rate is equal to a first integer divided by the duration of a first time domain resource, the first integer is linearly associated with the number of code blocks included in the first bit block, the first integer is a positive integer, and the time domain resources occupied by the first signal and the time domain resources occupied by the second signal are both the first time domain resource.

Typically, the first bit block includes part or all of the code blocks in the first transport block; the first integer is equal to the product of the number of code blocks included in the first bit block and a maximum integer not greater than a target integer and the target integer is equal to the number of bits included in the first transport block divided by the total number of code blocks included in the first transport block.

Typically, the same signaling scheduling the first signal and the second signal indicates the first time domain resource.

Typically, the duration of the first time domain resource is in seconds.

Typically, the duration of the first time domain resource is equal to the number of symbols included in the first time domain resource and the duration of one symbol in the first time domain resource.

Typically, a first time slot is a time slot to which the first time domain resource belongs and the duration of a symbol in the first time domain resource is equal to the duration of the first time slot divided by the number of symbols in the first time slot.

Typically, a first time slot is a time slot to which the first time domain resource belongs, the duration of a symbol in the first time domain resource is equal to $10^{-3}$ divided by a first integer, and the first integer is equal to the product of $2^\mu$ and the number of symbols in the first time slot, where $\mu$ is the numerology of the first signal and $\mu$ is a non-negative integer.

Typically, the phrase "the first signaling group includes the same signaling scheduling the first signal and the second signal" includes: the first signaling group includes only one signaling and the first signaling group is the same signaling scheduling the first signal and the second signal.

Typically, the phrase "the first signaling group includes the same signaling scheduling the first signal and the second signal" includes: the first signaling group includes Q signalings, the same signaling scheduling the first signal and the second signal is any one of the Q signalings, and the Q signalings include the same DCI.

As one embodiment, the phrase "the first signal and the second signal are scheduled for carrying a first bit block" includes: the first signal and the second signal are scheduled for carrying a first bit block together.

As one embodiment, the phrase "the first signal and the second signal are scheduled for jointly carrying a first bit block" includes: the first signal and the second signal are scheduled to jointly include one repetition of a first bit block.

As one embodiment, the phrase "the first signal and the second signal are scheduled for jointly carrying a first bit block" includes: the first signal and the second signal belong to the same transmission occasion of a first bit block.

As one embodiment, the phrase "the first signal and the second signal are scheduled for carrying a first bit block" includes: the first signal and the second signal each include two repetitions of a first bit block.

As one embodiment, the phrase "the first signal and the second signal are scheduled for carrying a first bit block" includes: the first signal and the second signal belong to two separate transmission occasions of a first bit block.

Typically, when the first signal and the second signal occupy PDSCH, the first signal and the second signal are scheduled by the same signaling in the first signaling group, and the first condition is met, both the first signal and the second signal are processed.

Typically, when the first signal and the second signal occupy PDSCH, the first signal and the second signal are scheduled by the same signaling in the first signaling group, and the first condition is not met, the first signal and the second signal are not required to be processed.

## Embodiment 11

Embodiment 11 exemplifies a structural block diagram of a processing apparatus for use in a first node device according to one embodiment of the present application; as shown in FIG. 11. In FIG. 11, the processing apparatus 1200 in the first node device includes at least the first receiver 1201 of a first receiver 1201 and a first transmitter 1202, wherein the first transmitter 1202 is optional.

As one embodiment, the first node device is a user device.

As one embodiment, the first node device is a relay node device.

As one embodiment, the first receiver 1201 includes at least one of {the antenna 452, the receiver 454, the receiving processor 456, the multi-antenna receiving processor 458, the controller/processor 459, the memory 460, the data source 467} of Embodiment 4.

As one embodiment, the first transmitter 1202 includes at least one of {the antenna 452, the transmitter 454, the transmitting processor 468, the multi-antenna transmitting processor 457, the controller/processor 459, the memory 460, the data source 467} of Embodiment 4.

The first receiver 1201 receives a first signaling group, which is used for scheduling a first signal and a second signal in a first serving cell;

In Embodiment 11, the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed depends on whether a first condition is met; and when the first condition is met, the target signal is processed; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

As one embodiment, when the first condition is not met, the target signal is not required to be processed.

As one embodiment, when the first signaling group is used for scheduling PUSCH, the target transmission rate is equal to the sum of the transmission rate of the first signal and the transmission rate of the second signal.

As one embodiment, when the first signaling group comprises a first signaling group and a second signaling group, the first signal is a PDSCH scheduled by the first signaling group, and the second signal is a PDSCH scheduled by the second signaling group, the target transmission rate is equal to the transmission rate of the target signal.

As one embodiment, when the first signal and the second signal are scheduled by the same signaling, the first signaling group includes the same signaling scheduling the first signal and the second signal, the first signaling group is used for scheduling PDSCH, the first signal and the second signal are scheduled for carrying a first bit block, and the first bit block includes part or all of the code blocks of a transport block, the target transmission rate is equal to a first integer divided by the duration of a first time domain resource, the first integer is linearly associated with the number of code blocks included in the first bit block, the first integer is a positive integer, and the time domain resources occupied by the first signal and the time domain resources occupied by the second signal are both the first time domain resource.

As one embodiment, the first node device includes:
a first transmitter 1202 sending the first signal and the second signal when the first signaling group is used for scheduling PUSCH and the first condition is met.

As one embodiment, the first node device includes:
the first receiver 1201, when the first signal and the second signal are PDSCH scheduled by the same signaling, the first signaling group includes the same signaling scheduling the first signal and the second signal, the first signal and the second signal are scheduled for carrying a first bit block, the first bit block includes part or all of the code blocks of a transport block, and the first condition is met, receives the first signal and the second signal.

As one embodiment, the first node device includes:
the first receiver 1201, when the first signaling group includes a first signaling and a second signaling, the first signal is a PDSCH scheduled by the first signaling, the second signal is a PDSCH scheduled by the second signaling, and the first signal meets the first condition, receives the first signal; when the first signaling group includes a first signaling and a second signaling, the first signal is a PDSCH scheduled by the first signaling, the second signal is a PDSCH scheduled by the second signaling, and the second signal meets the first condition, it receives the second signal.

### Embodiment 12

Embodiment 12 exemplifies a structural block diagram of a processing apparatus for use in a second node device, according to one embodiment of the present application; as shown in FIG. 12. In FIG. 12, the processing apparatus 1300 in the second node device includes at least the second transmitter 1301 of a second transmitter 1301 and a second receiver 1302, wherein the second receiver 1302 is optional.

As one embodiment, the second node device is a base station device.

As one embodiment, the second node device is a relay node device.

As one embodiment, the second transmitter 1301 includes at least one of {the antenna 420, the transmitter 418, the transmitting processor 416, the multi-antenna transmitting processor 471, the controller/processor 475, the memory 476} of Embodiment 4.

As one embodiment, the second receiver 1302 includes at least one of {the antenna 420, the receiver 418, the receiving processor 470, the multi-antenna receiving processor 472, the controller/processor 475, the memory 476} of Embodiment 4.

The second transmitter 1301 sends a first signaling group, which is used for scheduling a first signal and a second signal in a first serving cell;

In Embodiment 12, the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed by the receiver of the first signaling group depends on whether a first condition is met; and when the first condition is met, the target signal is processed by the receiver of the first signaling group; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

As one embodiment, when the first condition is not met, the receiver of the first signaling group is not required to process the target signal.

As one embodiment, when the first signaling group is used for scheduling PUSCH, the target transmission rate is equal to the sum of the transmission rate of the first signal and the transmission rate of the second signal.

As one embodiment, when the first signaling group comprises a first signaling group and a second signaling group, the first signal is a PDSCH scheduled by the first signaling group, and the second signal is a PDSCH scheduled by the second signaling group, the target transmission rate is equal to the transmission rate of the target signal.

As one embodiment, when the first signal and the second signal are scheduled by the same signaling, the first signaling group includes the same signaling scheduling the first signal and the second signal, the first signaling group is used for scheduling PDSCH, the first signal and the second signal are scheduled for carrying a first bit block, and the first bit block includes part or all of the code blocks of a transport block, the target transmission rate is equal to a first integer divided by the duration of a first time domain resource, the first integer is linearly associated with the number of code blocks included **in** the first bit block, the first integer is a positive integer, and the time domain resources occupied by the first signal and the time domain resources occupied by the second signal are both the first time domain resource.

As one embodiment, the second node device includes:
the second receiver 1302 receives the first signal and the second signal when the first signaling group is used for scheduling PUSCH and the first condition is met.

As one embodiment, the second node device includes:
the second transmitter 1301, when the first signal and the second signal are PDSCH scheduled by the same signaling, the first signaling group includes the same signaling scheduling the first signal and the second signal, the first signal and the second signal are scheduled for carrying a first bit block, the first bit block includes part or all of the code blocks of a transport block, and the first condition is met, sends the first signal and the second signal.

As one embodiment, the second node device includes:
the second transmitter 1301, when the first signaling group includes a first signaling and a second signaling, the first signal is a PDSCH scheduled by the first signaling, the second signal is a PDSCH scheduled by the second signaling, and the first signal meets the first condition, sends the first signal; when the first signaling group includes a first signaling and a second signaling, the first signal is a PDSCH scheduled by the first signaling, the second signal is a PDSCH scheduled by the second signaling, and the second signal meets the first condition, it sends the second signal.

As one embodiment, the second node device includes:
the second transmitter 1301, when the first signaling group is used for scheduling PDSCH, sends the first signal and the second signal.

Those of ordinary skill in the art may understand that all or part of the steps in the above described methods can be accomplished by instructing relevant hardware through a program that can be stored in computer-readable storage media, such as read-only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The user devices, terminals, and UEs in the present application include but are not limited to drones, communication modules on drones, remotely controlled aircrafts, aircrafts, small aircrafts, cell phones, tablets, notebooks, in-vehicle communications devices, wireless sensors, network cards, IoT terminals, RFID terminals, NB-IOT terminals, MTC (Machine Type Communication) terminals, eMTC (enhanced MTC) terminals, data cards, Internet cards, in-vehicle communications devices, low-cost mobile phones, low-cost tablet computers, and other wireless communication devices. The base stations or system devices in the present application include, but are not limited to, macrocellular base stations, microcellular base stations, home base stations, relay base stations, gNB NR node B, TRP (Transmitter Receiver Point), and other wireless communication devices.

The foregoing is merely a preferred embodiment of the present application and is not intended to limit the protective scope of the present application. Any changes and modifications made based on the embodiments described in the specification shall be deemed to be apparent and within the protective scope of the present invention if similar partial or all technical effects are obtained.

## Claims

1. A first node device for wireless communication, comprising:

   a first receiver receiving a first signaling group, which is used for scheduling a first signal and a second signal in a first serving cell; wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed depends on whether a first condition is met; and when the first condition is met, the target signal is processed; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

2. The first node device according to Claim 1, wherein when the first condition is not met, the target signal is not required to be processed.

3. The first node device according to Claim 1 or 2, wherein when the first signaling group is used for scheduling PUSCH, the target transmission rate is equal to the sum of the transmission rate of the first signal and the transmission rate of the second signal.

4. The first node device according to any one of Claims 1-3, wherein when the first signaling group comprises a first signaling group and a second signaling group, the first signal is a PDSCH scheduled by the first signaling group, and the second signal is a PDSCH scheduled by the second signaling group, the target transmission rate is equal to the transmission rate of the target signal.

5. The first node device according to any one of Claims 1-4, wherein when the first signal and the second signal are scheduled by the same signaling, the first signaling group includes the same signaling scheduling the first signal and the second signal, the first signaling group is used for scheduling PDSCH, the first signal and the second signal are scheduled for carrying a first bit block, and the first bit block includes part or all of the code blocks of a transport block, the target transmission rate is equal to a first integer divided by the duration of a first time domain resource, the first integer is linearly associated with the number of code blocks included in the first bit block, the first integer is a positive integer, and the time domain resources occupied by the first signal and the time domain resources occupied by the second signal are both the first time domain resource.

6. The first node device according to any one of Claims 1-5, wherein the device comprises:
   a first transmitter sending the first signal and the second signal when the first signaling group is used for scheduling PUSCH and the first condition is met.

7. The first node device according to any one of Claims 1-6, wherein the device comprises:
   when the first signal and the second signal are PDSCH scheduled by the same signaling, the first signaling group includes the same signaling scheduling the first signal and the second signal, the first signal and the second signal are scheduled for carrying a first bit block, the first bit block includes part or all of the code blocks of a transport block, and the first condition is met, the first receiver receives the first signal and the second signal.

8. A second node device for wireless communication, comprising:

   a second transmitter sending a first signaling group, which is used for scheduling a first signal and a second signal in a first serving cell; wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed by the receiver of the first signaling group depends on whether a first condition is met; and when the first condition is met, the target signal is processed by the receiver of the first signaling group; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

9. A method used in a first node for wireless communication, comprising:

receiving a first signaling group, which is used for scheduling a first signal and a second signal in a first serving cell;
wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed depends on whether a first condition is met; and when the first condition is met, the target signal is processed; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

10. A method used in a second node for wireless communication, comprising:

sending a first signaling group, which is used for scheduling a first signal and a second signal in a first serving cell;
wherein the first signaling group includes at least one signaling; the first signaling group is used for scheduling PDSCH, or the first signaling group is used for scheduling PUSCH; a first reference signal resource is used to determine the spatial characteristic of the first signal, and a second reference signal resource is used to determine the spatial characteristic of the second signal; time domain resources respectively scheduled for the first signal and the second signal are overlapped; a target signal is either of the first signal and the second signal, and whether the target signal is processed by the receiver of the first signaling group depends on whether a first condition is met; and when the first condition is met, the target signal is processed by the receiver of the first signaling group; when the first signaling group is used for scheduling PDSCH, the processing includes receiving and the spatial characteristic includes QCL parameters; when the first signaling group is used for scheduling PUSCH, the processing includes sending; and the first condition comprises a target transmission rate being less than or equal to a target rate threshold, and the calculation of the target transmission rate depends on whether the first signaling group is used for scheduling a PDSCH or a PUSCH.

100

First node

↓

Receive first signaling group —— 101

FIG. 1

5GS/EPS 200

HSS/UDM —— 220

NG-RAN 202

MME/AMF/ SMF —— 211

Other MME/AMF /SMF —— 214

UE —— 201

NR node B —— 203

UE —— 241

Other NR node B —— 204

S-GW/UPF —— 212

P-GW/UPF —— 213

Internet services —— 230

5GC/EPC 210

FIG. 2

Control plane 300

L3
RRC —— 306

305

PDCP —— 304

L2
RLC —— 303

MAC —— 302

L1
PHY —— 301

User plane 350

SDAP —— 356

355

L2
PDCP —— 354

RLC —— 353

MAC —— 352

L1
PHY —— 351

FIG. 3

410

416 Transmitting processor
471 Multi-antenna transmitting processor
418 420 Transmitter / Receiver
452 454 Transmitter / Receiver
457 Multi-antenna transmitting processor
450
468 Transmitting processor

475

Memory

Controller/ Processor

Controller/ Processor

459

Memory —— 460

Data source —— 467

476

470 Receiving processor
472 Multi-antenna receiving processor
418 420 Transmitter / Receiver
454 452 Transmitter / Receiver
458 Multi-antenna receiving processor
456 Receiving processor

FIG. 4

| N02.Second node | | U01.First node |
|---|---|---|

S5201.Send first signaling group

First signaling group →

S5101.Receive first signaling group

S5102.Send first signal and second signal

← First signal and second signal

S5202.Receive first signal and second signal

F1.Optional

S5203.Send first signal and second signal

First signal and second signal →

F2.Optional

S5103.Receive first signal and second signal

End

End

FIG. 5

The spatial characteristic $\xrightarrow{\text{Including}}$ QCL parameters

The processing $\xrightarrow{\text{Including}}$ Receive

(a) When the first signaling group is used for scheduling PDSCH

The processing $\xrightarrow{\text{Including}}$ Send

(b) When the first signaling group is used for scheduling PUSCH

When the first condition is met, the target signal is processed

The first condition $\xrightarrow{\text{Including}}$ The target transmission rate is less than or equal to the target rate threshold

Calculation of the target transmission rate $\xrightarrow{\text{Depends on}}$ The first signaling group is used for scheduling PDSCH or occupying PUSCH

FIG. 6

When the first condition is not met $\longrightarrow$ The target signal is not required to be processed

FIG. 7

When the first signaling group is used for scheduling PUSCH,

The target transmission rate = the transmission rate of the first signal + the transmission rate of the second signal

FIG. 8

When the first signaling group includes a first signaling and a second signaling, the first signal is a PDSCH scheduled by the first signaling, and the second signal is a PDSCH scheduled by the second signaling,

The target transmission rate = the transmission rate of the target signal

FIG. 9

When the first signal and the second signal are scheduled by the same signaling, the first signaling group includes the same signaling scheduling the first signal and the second signal, the first signaling group is used for scheduling PDSCH, the first signal and the second signal are scheduled for carrying a first bit block, and the first bit block includes part or all of the code blocks of a transport block,

$$\text{The target transmission rate} = \frac{\text{First integer}}{\text{Duration of the first time domain resource}}$$

The first integer is linearly associated with the number of code blocks included in the first bit block

FIG. 10

FIG. 11

FIG. 12

## INTERNATIONAL SEARCH REPORT

| International application No. |
| --- |
| **PCT/CN2023/115174** |

| A. | CLASSIFICATION OF SUBJECT MATTER |
| --- | --- |

H04W 72/12(2023.01)i; H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, VCN, DWPI, ENTXT, CNKI, 3GPP: PDSCH, PUSCH, 调度, 传输速率, 速率, 小于, 等于, 发送, 接收, 信令, 空间特性, 资源, 时域, 重叠, 交叠, receiv+, transmit+, data, rate, smaller, lower, schedul+, DCI, QCL

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | WO 2022211599 A1 (SAMSUNG ELECTRONICS CO., LTD.) 06 October 2022 (2022-10-06)<br>description, paragraphs [0158]-[0341] | 1-10 |
| X | US 2022070898 A1 (SAMSUNG ELECTRONICS CO., LTD.) 03 March 2022 (2022-03-03)<br>description, paragraphs [0053]-[0137] and [0226]-[0251], and figure 11 | 1-10 |
| A | CN 112199216 A (ZEKU TECHNOLOGY (BEIJING) CO., LTD.) 08 January 2021 (2021-01-08)<br>entire document | 1-10 |
| A | CN 114362899 A (BEIJING SAMSUNG COMMUNICATION TECHNOLOGY RESEARCH CO., LTD. et al.) 15 April 2022 (2022-04-15)<br>entire document | 1-10 |
| A | WO 2021228256 A1 (HUAWEI TECHNOLOGIES CO., LTD.) 18 November 2021 (2021-11-18)<br>entire document | 1-10 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 November 2023** | **29 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/115174** |

### C.    DOCUMENTS CONSIDERED TO BE RELEVANT

| Category* | Citation of document, with indication, where appropriate, of the relevant passages | Relevant to claim No. |
| --- | --- | --- |
| A | ERICSSON. "Physical channel timing relationships for MTC" <br> *3GPP TSG-RAN WG1 Meeting #80bis R1-151206*, 24 April 2015 (2015-04-24), <br> parts 2-4 | 1-10 |

Form PCT/ISA/210 (second sheet) (July 2022)

**INTERNATIONAL SEARCH REPORT**
Information on patent family members

International application No.

**PCT/CN2023/115174**

| Patent document cited in search report | | | Publication date (day/month/year) | Patent family member(s) | | | Publication date (day/month/year) |
|---|---|---|---|---|---|---|---|
| WO | 2022211599 | A1 | 06 October 2022 | KR | 20220137486 | A | 12 October 2022 |
| US | 2022070898 | A1 | 03 March 2022 | WO | 2020166993 | A1 | 20 August 2020 |
| | | | | EP | 3910858 | A1 | 17 November 2021 |
| | | | | KR | 20200099044 | A | 21 August 2020 |
| CN | 112199216 | A | 08 January 2021 | WO | 2022083340 | A1 | 28 April 2022 |
| CN | 114362899 | A | 15 April 2022 | WO | 2022080775 | A1 | 21 April 2022 |
| | | | | KR | 20230084473 | A | 13 June 2023 |
| WO | 2021228256 | A1 | 18 November 2021 | US | 2023087902 | A1 | 23 March 2023 |
| | | | | EP | 4149132 | A1 | 15 March 2023 |
| | | | | CN | 113676293 | A | 19 November 2021 |
| | | | | IN | 202237069966 | A | 28 April 2023 |

Form PCT/ISA/210 (patent family annex) (July 2022)